# EUROPEAN PATENT APPLICATION

(11) **EP 2 752 740 A1**
(43) Date of publication of application: **09.07.2014**
(21) Application number: 12876594.8
(22) Date of filing: 31.12.2012
(51) Int. Cl.: G06F 3/041

(54) **DRAWING CONTROL METHOD, APPARATUS AND MOBILE TERMINAL**

(71) Applicant: Huawei Device Co., Ltd., Shenzhen, Guangdong 518129 (CN)
(72) Inventor: WU, Lei, Shenzhen Guangdong 518129 (CN)
(74) Representative: Pfenning, Meinig & Partner GbR
(86) International application number: PCT/CN2012/083876
(87) International publication number: WO 2014/067110

(57) **Abstract**

In a drawing control method, an apparatus, and a terminal provided in the embodiments, a gesture track input by a user is detected, where the gesture track is a gesture track generated in a process in which the user controls non-contact movement of an input device relative to a display screen, then first attribute information about the gesture track is acquired, and then the gesture track is recognized according to a preset rule and the first attribute information about the gesture track, so as to acquire second attribute information about the gesture track, and finally the gesture track is presented according to the second attribute information about the gesture track; in this manner, part of feature information required for presenting the track is carried in the first attribute information about the gesture track, and therefore, it is avoided that the user frequently manually switches all kinds of options to implement the input of the gesture track, thereby solving a problem of the complexity in drawing operations.

## Description

### TECHNICAL FIELD

The present invention relates to mobile communication technologies, and in particular, to a drawing control method, an apparatus, and a terminal.

### BACKGROUND

The popularity of terminal devices makes touch interaction a basic operation mode on smart mobile devices. Because of limitations of touch and a tendency of integrated use of multiple types of sensors on a smart mobile device, more and more non-touch interaction operation modes become possible.

On a terminal device, when changing stroke thickness and transparency in an existing drawing tool, a user needs to make a manual selection. In existing touchscreen drawing, before drawing is made, the stroke thickness and the transparency are selected, or after the drawing is made, the stroke thickness and the transparency are changed by clicking selection. In this manner, to draw a pattern, multiple options such as a brushwork type, thickness, transparency, and a color need to be selected, so the operations are complex.

### SUMMARY

Accordingly, embodiments of the present invention provide a drawing control method, an apparatus, and a terminal, so as to solve a problem of the complexity in drawing operations.

In a first aspect, an embodiment of the present invention provides a drawing control method, including: detecting a gesture track input by a user, where the gesture track is a gesture track generated in a process in which the user controls non-contact movement of an input device relative to a display screen; acquiring first attribute information about the gesture track, where the first attribute information about the gesture track is feature information about the gesture track, which is recognized by a terminal; recognizing the gesture track according to a preset rule and the first attribute information about the gesture track, so as to acquire second attribute information about the gesture track, where the second attribute information about the gesture track includes part or all of the feature information required by the terminal for displaying the gesture track; and presenting the gesture track according to the second attribute information about the gesture track.

In a first possible implementation manner of the first aspect, the first attribute information about the gesture track includes any one of the following attributes or a combination thereof: a distance between each point on the gesture track and the display screen; a moving speed or an acceleration of each point on the gesture track; and a pause time of each point on the gesture track.

In combination with the first aspect or the first implementation manner of the first aspect, in a second possible implementation manner of the first aspect, the second attribute information about the gesture track includes any one of the following attributes or a combination thereof: thickness of each point which is on the gesture track and to be presented; and transparency of each point which is on the gesture track and to be presented.

In combination with the first aspect, or the first possible implementation manner of the first aspect, or the second possible implementation manner of the first aspect, or a first possible implementation manner of the third aspect, in a third possible implementation manner of the first aspect, before the presenting the gesture track according to the second attribute information about the gesture track, the method further includes: acquiring a drawing brushwork type, where the presenting the gesture track according to the second attribute information about the gesture track specifically includes: presenting the gesture track according to the second attribute information about the gesture track and the drawing brushwork type.

According to the third implementation manner of the first aspect, in a fourth possible implementation manner of the first aspect, the acquiring the drawing brushwork type specifically includes: acquiring a first gesture command input by the user; and determining the drawing brushwork type according to the first gesture command.

According to the fourth implementation manner of the first aspect, in a fifth possible implementation manner of the first aspect, the determining the drawing brushwork type according to the first gesture command specifically includes: determining a drawing brushwork type corresponding to the first gesture according to the first gesture command; or presenting at least one drawing brushwork type according to the first gesture command; and determining the drawing brushwork type by receiving selection made by the user on at least one drawing brushwork type.

In combination with the first aspect and the above possible implementation manners, in a sixth possible implementation manner of the first aspect, the method further includes: acquiring a second gesture command input by the user; and determining a drawing brushwork color according to the second gesture command, where the presenting the gesture track according to the second attribute information about the gesture track specifically includes: presenting the gesture track according to the second attribute information about the gesture track and the drawing brushwork color; or presenting the gesture track according to the second attribute information about the gesture track, the drawing brushwork type and the drawing brushwork color.

In combination with the first aspect and the above possible implementation manners, in a seventh possible implementation manner of the first aspect, after the presenting the gesture track according to the second attribute information about the gesture track, the method further includes: acquiring a third gesture command input by the user; and performing an operation of deleting part or all of the presented gesture track according to the third gesture command.

In combination with the first aspect and the above possible implementation manners, in an eighth possible implementation manner of the first aspect, when the first attribute information about the gesture track is the distance between each point on the gesture track and the display screen and the second attribute information about the gesture track is the thickness of each point which is on the gesture track and to be presented, the preset rule is that the shorter the distance between each point on the gesture track and the display screen is, the thicker the thickness of each point which is on the gesture track and to be presented is; or that the shorter the distance between each point on the gesture track and the display screen is, the thinner the thickness of each point which is on the gesture track and to be presented is.

In combination with the first aspect and the above possible implementation manners, in a ninth possible implementation manner of the first aspect, when the first attribute information about the gesture track is the distance between each point on the gesture track and the display screen and the second attribute information about the gesture track is the transparency of each point which is on the gesture track and to be presented, the preset rule is that the shorter the distance between each point on the gesture track and the display screen is, the lower the transparency of each point which is on the gesture track and to be presented is; or that the shorter the distance between each point on the gesture track and the display screen is, the higher the transparency of each point which is on the gesture track and to be presented is.

In combination with the first aspect and the above possible implementation manners, in a tenth possible implementation manner of the first aspect, when the first attribute information about the gesture track is the moving speed or the acceleration of the gesture track and the second attribute information about the gesture track is the thickness of each point which is on the gesture track and to be presented, the preset rule is that the lower the moving speed or the acceleration of the gesture track is, the thicker the thickness of each point which is on the gesture track and to be presented is; or that the shorter the distance between each point on the gesture track and the display screen is, the thinner the thickness of each point which is on the gesture track and to be presented is.

In combination with the first aspect and the above possible implementation manners, in an eleventh possible implementation manner of the first aspect, when the first attribute information about the gesture track is the pause time of each point on the gesture track and the second attribute information about the gesture track is the thickness of each point which is on the gesture track and to be presented, the preset rule is that the longer the pause time of each point on the gesture track is, the thicker the thickness of each point which is on the gesture track and to be presented is; or that the longer the pause time of each point on the gesture track is, the thinner the thickness of each point which is on the gesture track and to be presented is.

In a second aspect, a drawing control apparatus is provided, including: a detection module, configured to detect a gesture track input by a user, where the gesture track is a gesture track generated in a process in which the user controls non-contact movement of an input device relative to a display screen; a first attribute information acquisition module, configured to acquire first attribute information about the gesture track according to the gesture track detected by the detection module, where the first attribute information about the gesture track is feature information about the gesture track, which is recognized by a terminal; a second attribute information acquisition module, configured to recognize the gesture track according to a preset rule and the first attribute information which is about the gesture track and acquired by the first attribute information acquisition module, so as to acquire second attribute information about the gesture track, where the second attribute information about the gesture track includes part or all of the feature information required by the terminal for displaying the gesture track; and a presentation module, configured to present the gesture track according to the second attribute information which is about the gesture track and acquired by the second attribute information acquisition module.

According to the second aspect, in a first possible implementation manner of the second aspect, the first attribute information about the gesture track includes any one of the following attributes or a combination thereof: a distance between each point on the gesture track and the display screen; a moving speed or an acceleration of each point on the gesture track; and a pause time of each point on the gesture track.

In combination with the second aspect or the first possible implementation manner of the second aspect, in a second possible implementation manner of the second aspect, the second attribute information about the gesture track includes any one of the following attributes or a combination thereof: thickness of each point which is on the gesture track and to be presented; and transparency of each point which is on the gesture track and to be presented.

In combination with the second aspect and the above possible implementation manners, in a third possible implementation manner of the second aspect, the drawing control apparatus further includes: a drawing brushwork type acquisition module, configured to acquire a drawing brushwork type, where the presentation module is specifically configured to present the gesture track according to the second attribute information which is about the gesture track and acquired by the second attribute information acquisition module and the drawing brushwork type acquired by the drawing brushwork type acquisition module.

According to the third implementation manner of the second aspect, in a fourth possible implementation manner of the second aspect, the drawing control apparatus further includes a gesture command acquisition module, configured to acquire a first gesture command input by the user, where the drawing brushwork type acquisition module is specifically configured to determine the drawing brushwork type according to the first gesture command acquired by the gesture command acquisition module.

According to the fourth possible implementation manner of the second aspect, in a fifth possible implementation manner of the second aspect, the drawing brushwork type acquisition module is specifically configured to: determine a drawing brushwork type corresponding to the first gesture according to the first gesture command acquired by the gesture command acquisition module; or present at least one drawing brushwork type according to the first gesture command acquired by the gesture command acquisition module; and determine the drawing brushwork type by receiving selection made by the user on at least one drawing brushwork type.

In combination with the second aspect and the above possible implementation manners of the second aspect, in a sixth possible implementation manner of the second aspect, the gesture command acquisition module is further configured to acquire a second gesture command input by the user; the drawing control apparatus further includes a drawing brushwork color acquisition module, configured to determine a drawing brushwork color according to the second gesture command acquired by the gesture command acquisition module; the presentation module is specifically configured to present the gesture track according to the second attribute information about the gesture track and the drawing brushwork color; or present the gesture track according to the second attribute information about the gesture track, the drawing brushwork type and the drawing brushwork color.

In combination with the second aspect and the above possible implementation manners of the second aspect, in a seventh possible implementation manner of the second aspect, the gesture command acquisition module is further configured to acquire a third gesture command input by the user; the drawing control apparatus further includes a deletion module, configured to perform an operation of deleting part or all of the presented gesture track according to the third gesture command acquired by the gesture command acquisition module.

In a third aspect, a terminal is provided, including: an input apparatus, configured to detect a gesture track input by a user, where the gesture track is a gesture track generated in a process in which the user controls non-contact movement of an input device relative to a display screen; a central processing unit, configured to parse first attribute information which is about the gesture track and acquired by the input apparatus, where the first attribute information about the gesture track is feature information about the gesture track, which is recognized by the terminal, where the central processing unit is further configured to recognize the gesture track according to a preset rule and the first attribute information about the gesture track, so as to acquire second attribute information about the gesture track, where the second attribute information about the gesture track includes part or all of the feature information required by the terminal for displaying the gesture track; a display screen, configured to present the gesture track according to the second attribute information which is about the gesture track and acquired by the central processing unit; and a memory, configured to store the preset rule.

According to the third aspect, in a first possible implementation manner of the third aspect, the first attribute information about the gesture track includes any one of the following attributes or a combination thereof: a distance between each point on the gesture track and the display screen; a moving speed or an acceleration of each point on the gesture track; and a pause time of each point on the gesture track.

In combination with the third aspect or the first possible implementation manner of the third aspect, in a second possible implementation manner of the third aspect, the second attribute information about the gesture track includes any one of the following attributes or a combination thereof: thickness of each point which is on the gesture track and to be presented; and transparency of each point which is on the gesture track and to be presented.

In combination with the third aspect and the above possible implementation manners of the third aspect, in a third possible implementation manner of the third aspect, the central processing unit is further configured to acquire a drawing brushwork type; and the display screen is specifically configured to present the gesture track according to the second attribute information about the gesture track and the drawing brushwork type.

According to the third possible implementation manner of the third aspect, in a fourth possible implementation manner of the third aspect, the input apparatus is further configured to acquire a first gesture command input by the user; and the central processing unit is specifically configured to determine the drawing brushwork type according to the first gesture command acquired by the input apparatus.

According to the fourth possible implementation manner of the third aspect, in a fifth possible implementation manner of the third aspect, the central processing unit is specifically configured to: determine a drawing brushwork type corresponding to the first gesture according to the first gesture command acquired by the input apparatus; or present at least one drawing brushwork type according to the first gesture command acquired by the input apparatus; and determine the drawing brushwork type through selection made by the user and received by the input apparatus on at least one drawing brushwork type.

According to the third aspect and the above possible implementation manners of the third aspect, in a sixth possible implementation manner of the third aspect, the input apparatus is further configured to acquire a second gesture command input by the user; the central processing unit is further configured to determine a drawing brushwork color according to the second gesture command acquired by the input apparatus; and the display screen is specifically configured to present the gesture track according to the second attribute information about the gesture track and the drawing brushwork color; or present the gesture track according to the second attribute information about the gesture track, the drawing brushwork type and the drawing brushwork color.

According to the third aspect and the above possible implementation manners of the third aspect, in a seventh possible implementation manner of the third aspect, the input apparatus is further configured to acquire a third gesture command input by the user; the central processing unit is further configured to instruct, according to the third gesture command acquired by the input apparatus, the display screen to perform an operation of deleting all or part of the presented gesture track.

In the drawing control method, the apparatus, and the terminal provided in the embodiments, the gesture track input by the user is detected, where the gesture track is the gesture track generated in the process in which the user controls the non-contact movement of the input device relative to the display screen, the first attribute information about the gesture track is acquired, and then the gesture track is recognized according to the preset rule and the first attribute information about the gesture track, to acquire the second attribute information about the gesture track, and finally the gesture track is presented according to the second attribute information about the gesture track; in this manner, part of feature information required for presenting the track is carried in the first attribute information about the gesture track, and therefore, it is avoided that the user frequently manually switches all kinds of options to implement the input of the gesture track, thereby solving a problem of the complexity in drawing operations.

### BRIEF DESCRIPTION OF DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only about some embodiments of the present invention, and persons of ordinary skill in the art can derive other drawings from the accompanying drawings without creative efforts.
FIG. 1 is a flow chart of a drawing control method provided in an embodiment of the present invention;
FIG. 1A to FIG. 1F are schematic diagrams of a gesture track presented in an embodiment of the present invention;
FIG. 2 is a flow chart of a drawing control method provided in another embodiment of the present invention;
FIG. 3 is a flow chart of a drawing control method provided in still another embodiment of the present invention;
FIG. 4 is a flow chart of a drawing control method provided in yet another embodiment of the present invention;
FIG. 5 is a flow chart of a drawing control method provided in yet another embodiment of the present invention;
FIG. 6 to FIG. 10 are schematic structural diagrams of a drawing control apparatus in an embodiment of the present invention, and;
FIG. 11 is a schematic structural diagram of a terminal in an embodiment of the present invention.

### DESCRIPTION OF EMBODIMENTS

In order to make the objectives, technical solutions, and advantages of embodiments of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

An execution body in each embodiment of the present invention is a terminal. The terminal may be a fixed terminal, for example, a desktop computer or a television, or may be a mobile terminal, for example, a tablet computer or a mobile phone, or even may be a projector. The terminal in each embodiment of the present invention may support non-contact touch control and of course, may also support contact touch control. During the non-contact touch control or the contact touch control, a display screen or the terminal can detect a distance between a finger and a screen, a moving speed or an acceleration of the finger, and a pause time of the finger and the like.

A gesture involved in all the embodiments of the present invention may be a gesture recognized after a direct contact with the terminal, for example, a single-click, a double-click, movement and the like on a surface of a display screen, or may be a gesture recognized by the terminal without a direct touch with the terminal, for example, a gesture recognized when moving nearby the display screen of the terminal, including a moving operation of a hand before the display screen.

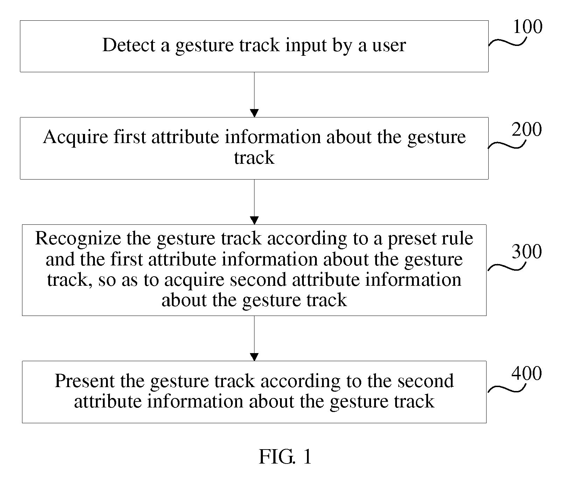

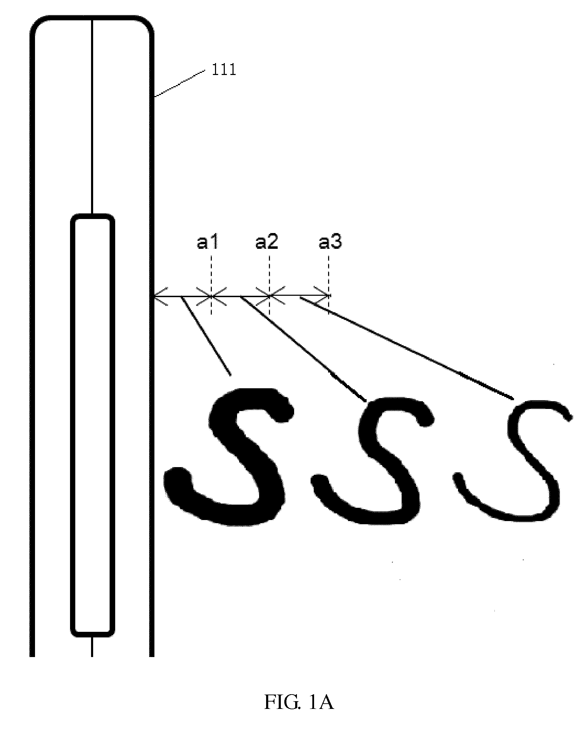

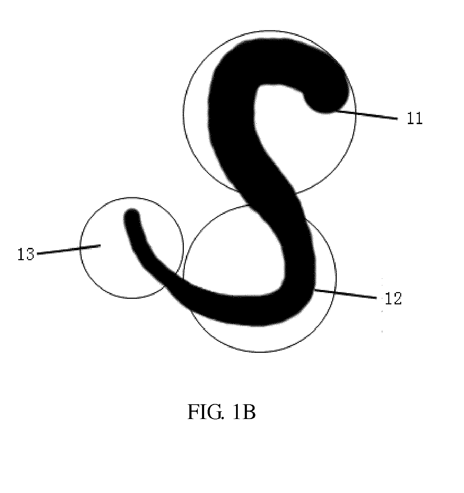

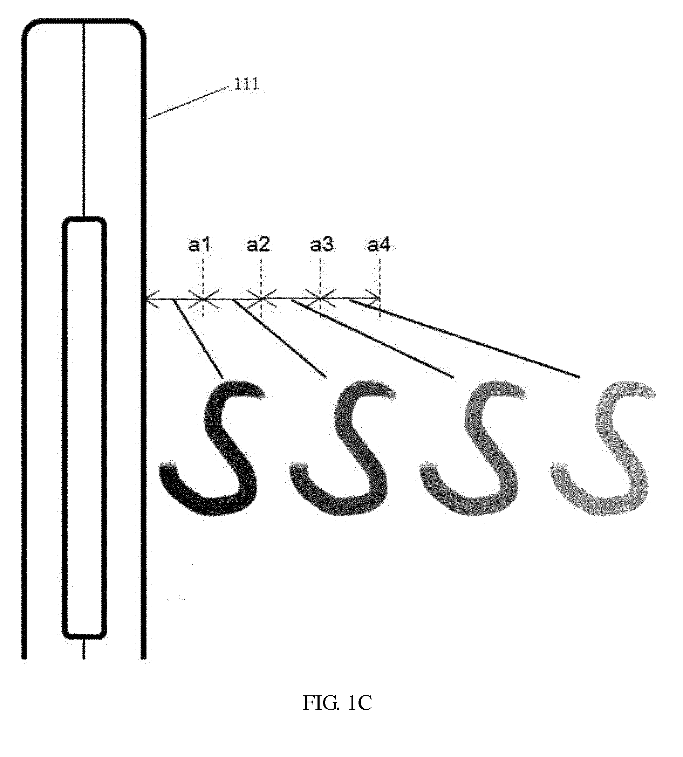

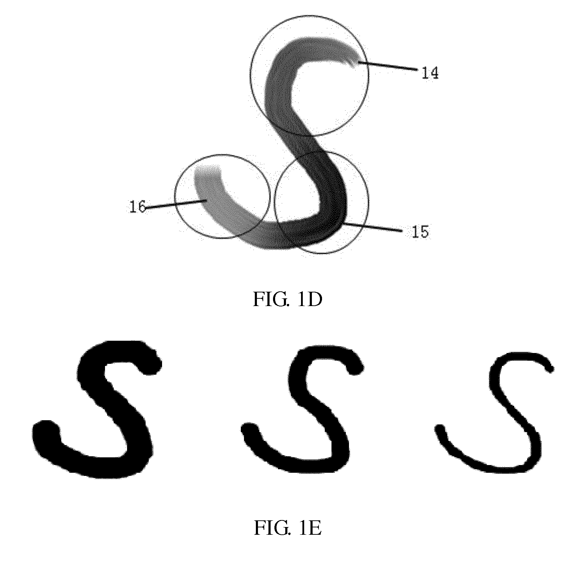

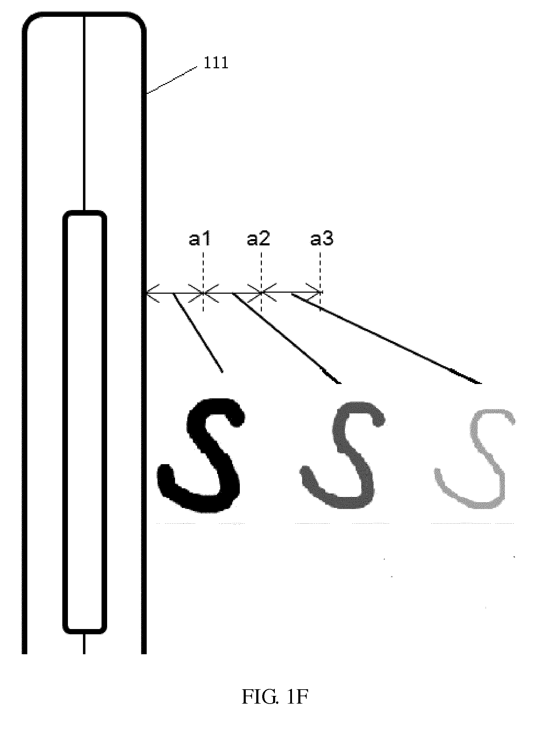

FIG. 1 is a flow chart of a drawing control method provided in an embodiment of the present invention. As shown in FIG. 1, the method in this embodiment includes:

Step 100: Detect a gesture track input by a user, where the gesture track is a gesture track generated in a process in which the user controls non-contact movement of an input device relative to a display screen.

It should be noted that the gesture track is a gesture track generated in the process in which the user controls non-contact movement of the input device relative to the display screen, in this situation, the input device is a finger or another part of the user as long as the finger or another part of the user can be recognized by the terminal.

In addition, the gesture track may also be a gesture track generated in a process in which the user controls contact movement of the input device relative to the display screen, where the input device may be an input device used for a touchscreen device, such as a handwriting pen, a stylus, a touchscreen pen, a touch pen, or a mobile phone pen. At this time, the first attribute information about the gesture track includes any one of the following attributes or a combination thereof: a moving speed or an acceleration of each point on the gesture track, and a pause time of each point on the gesture track.

Step 200: Acquire first attribute information about the gesture track.

It should be noted that the first attribute information about the gesture track is feature information about the gesture track, which is recognized by the terminal, and specifically, hardware such as the display screen of the terminal, a variety of sensors, or a microphone can be used to recognize the feature information about the gesture track. For example, the first attribute information about the gesture track includes any one of the following attributes or a combination thereof: a distance between each point on the gesture track and the display screen; a moving speed or an acceleration of the gesture track; and a pause time of each point on the gesture track. The above listed first attribute information is merely an example, and other attribute information may be further used, that is, all attribute information used by the terminal to recognize the gesture track can be applied in the embodiment of the present invention, which falls within the protection scope of the embodiment of the present invention.

Step 300: Recognize the gesture track according to a preset rule and the first attribute information about the gesture track, so as to acquire second attribute information about the gesture track.

It should be noted that the second attribute information about the gesture track includes part or all of the feature information required by the terminal for displaying the gesture track. For example, the second attribute information about the gesture track includes any one of the following attributes or a combination thereof: thickness of each point which is on the gesture track and to be presented; and transparency of each point which is on the gesture track and to be presented. The above listed second attribute information is merely an example, and other attribute information may be further used, that is, all feature information required by the terminal for displaying the gesture track can be applied in the embodiment of the present invention, which falls within the protection scope of the embodiment of the present invention.

The preset rule is pre-stored correspondence between the first attribute information about the gesture track and the second attribute information about the gesture track, and the preset rule may be set when the terminal is delivered by a factory or may be downloaded to the local terminal from a server through a network.

It should be further noted that the correspondence between the first attribute information about the gesture track and the second attribute information about the gesture track may be discrete, that is, the first attribute information about the gesture track is divided into different intervals, and each interval is corresponding to a value of the second attribute information about the gesture track; or the correspondence may be continuous, that is, it is not divided into intervals but a conversion coefficient is preset, where the conversion coefficient is used to convert the first attribute information about the gesture track to obtain the second attribute information about the gesture track, that is, the first attribute information about the gesture track is multiplied by the preset conversion coefficient to obtain the second attribute information about the gesture track.

For example, when the first attribute information about the gesture track is the distance between each point on the gesture track and the display screen and the second attribute information about the gesture track is thickness of each point which is on the gesture track and to be presented, the preset rule is that the correspondence between the distance between each point on the gesture track and the display screen and thickness of each point which is on the gesture track and to be presented is that the shorter the distance between each point on the gesture track and the display screen is, the thicker the thickness of each point which is on the gesture track and to be presented is, as shown in FIG. 1A. In non-contact touch control, the screen can detect the distance between the finger and the display screen. Based on a maximum distance in which the terminal can sense the finger as an upper limit, the distance between the finger and the display screen is divided into multiple intervals, it is assumed that the distance is divided into three intervals: (0, a1), (a1, a2), and (a2, a3) (a1<a2<a3, and a1, a2, and a3 represent values of distances), and each interval is corresponding to a value of the thickness. Of course, the preset rule may also be that the shorter the distance between each point on the gesture track and the display screen is, the thinner the thickness of each point which is on the gesture track and to be presented is, which can be specifically set according to actual conditions. Therefore, the thickness of the track on the display screen changes as the distance between the finger and the display screen changes; when the distance between the finger and the display screen falls within different intervals, tracks drawn on the display screen are different; in this manner, the user can freely perform switch between multiple types of thickness by controlling the distance between the finger and the display screen, without requiring manually switching thickness options before the drawing.

It should be further noted that when a single stroke of line is drawn, the effect of different thickness in the single stroke of line can also be achieved by controlling the distance between the finger and the display screen, thereby achieving free drawing when an image is drawn. As shown in FIG. 1B, a zone 11 in a single stroke of line is drawn when a distance between the finger and a display screen 51 falls within the interval (0, a1), a zone 12 in the single stroke of line is drawn when the distance between the finger and the display screen 51 falls within the interval (a1, a2), a zone 13 in the single stroke of line is drawn when the distance between the finger and the display screen 51 falls within the interval (a2, a3), and the drawing effect cannot be achieved in the input of a single stroke in an existing drawing tool.

It should be further noted that the above correspondence between the distance between each point on the gesture track and the display screen and thickness of each point which is on the gesture track and to be presented is discrete, or the correspondence may be continuous, that is, it is not divided into intervals but a conversion coefficient is preset, where the conversion coefficient is used to convert the distance between each point on the gesture track and the display screen to obtain the thickness of each point which is on the gesture track and to be presented, that is, the distance between each point on the gesture track and the display screen is multiplied by the preset conversion coefficient to obtain the thickness of each point on the gesture track.

For example, when the first attribute information about the gesture track is the distance between each point on the gesture track and the display screen and the second attribute information about the gesture track is transparency of each point which is on the gesture track and to be presented, the preset rule is the correspondence between the distance between each point on the gesture track and the display screen and the transparency of each point on the gesture track is that the shorter the distance between each point on the gesture track and the display screen, and the preset rule is that the lower the transparency of each point which is on the gesture track and to be presented is, as shown in FIG. 1C. In non-contact touch control, the screen can detect the distance between the finger and the display screen. Based on a maximum distance in which the terminal can sense the finger as an upper limit, a distance d between the finger and the display screen is divided into multiple intervals, it is assumed that the distance d is divided into four intervals: d>a1, a1<d<a2, a2<d<a3), and a3<d<a4 (a1<a2<a3<a4, and a1, a2, a3 and a4 represent values of distances), and each interval is corresponding to a value of the transparency. Of course, the preset rule may also be that the shorter the distance between each point on the gesture track and the display screen is, the higher the transparency of each point which is on the gesture track and to be presented is, which can be specifically set according to actual conditions. Therefore, the transparency of the track on the display screen changes as the distance between the finger and the display screen changes; when the distance between the finger and the display screen falls within different intervals, tracks drawn on the display screen are different; in this manner, the user can freely perform switch between multiple types of transparency by controlling the distance between the finger and the display screen, without requiring manually switching transparency options before the drawing.

It should be further noted that when a single stroke of line is drawn, the effect of different transparency in the single stroke of line can also be achieved by controlling the distance between the finger and the display screen, thereby achieving free drawing when an image is drawn. As shown in FIG. 1D, a zone 14 in a single stroke of line is drawn when a distance d between the finger and the display screen 51 falls within the interval a1<d<a2, a zone 15 in the single stroke of line is drawn when the distance d between the finger and the display screen 51 falls within the interval d>a1, a zone 16 in the single stroke of line is drawn when the distance d between the finger and the display screen 51 falls within the interval a3<d<a4, and the drawing effect cannot be achieved in the input of a single stroke in an existing drawing tool.

It should be further noted that the above correspondence between the distance between each point on the gesture track and the display screen and transparency of each point which is on the gesture track and to be presented is discrete, or the correspondence may be continuous, that is, it is not divided into intervals but a conversion coefficient is preset, where the conversion coefficient is used to convert the distance between each point on the gesture track and the display screen to obtain the transparency of each point which is on the gesture track and to be presented, that is, the distance between each point on the gesture track and the display screen is multiplied by the preset conversion coefficient to obtain the transparency of each point on the gesture track.

For example, when the first attribute information about the gesture track is a moving speed or an acceleration of each point on the gesture track and the second attribute information about the gesture track is thickness of each point which is on the gesture track and to be presented, the preset rule is the correspondence between the moving speed or the acceleration of each point on the gesture track and the thickness of each point which is on the gesture track and to be presented, the preset rule is that the lower the moving speed or the acceleration of the gesture track is, the thicker the thickness of each point which is on the gesture track and to be presented is, referring to FIG. 1E. In non-contact touch control, the screen can detect a moving speed v of the finger moving nearby the display screen; the moving speed of the finger moving nearby the display screen is divided into multiple intervals, it is assumed that the moving speed is divided into three intervals: v<b1, b1<v<b2 and v>b2 (b1<b2, and b1 and b2 represent values of speeds), and each interval is corresponding to a value of the thickness. Of course, the preset rule may also be that the lower the moving speed or the acceleration of the gesture track is, the thinner the thickness of each point which is on the gesture track and to be presented is, which can be specifically set according to actual conditions. Therefore, the thickness of the track drawn on the display screen changes as the moving speed v of the finger moving nearby the display screen changes; when the moving speed v of the finger moving nearby the display screen falls within different intervals, tracks drawn on the display screen are different; in this manner, the user can freely perform switch between multiple types of thickness by controlling the moving speed v of the finger moving nearby the display screen, without requiring manually switching thickness options before the drawing. With the embodiment of the present invention, a line with changing thickness can be drawn on the screen by using manners such as a pen movement with a changing speed, and even a pen pause and a pen return, as what to be really done by a pen to draw on a piece of paper. This drawing manner simulates the feeling of drawing on a surface of the real paper, and generally, can be learned by the user without learning.

For example, when the first attribute information about the gesture track is a pause time of each point on the gesture track and the second attribute information about the gesture track is thickness of each point which is on the gesture track and to be presented, the preset rule is the correspondence between the pause time of each point on the gesture track and the thickness of each point which is on the gesture track and to be presented, the preset rule is that the longer the pause time of each point on the gesture track is, the thicker the thickness of each point which is on the gesture track and to be presented is, referring to FIG. 1E. In non-contact touch control, the screen can detect a pause time t of the finger pausing nearby the display screen; the pause time t of the finger pausing nearby the display screen is divided into multiple intervals, it is assumed that the pause time t is divided into three intervals: t<c1 c1<t<c2, and t>c2 (c1<c2, and c1 and c2 represent the pause time of the finger pausing nearby the display screen), and each interval is corresponding to a value of the thickness. Of course, the preset rule may also be that the longer the pause time of each point on the gesture track is, the thinner the thickness of each point which is on the gesture track and to be presented is, which can be specifically set according to actual conditions. Therefore, the thickness of the track drawn on the display screen changes as the pause time t of the finger pausing nearby the display screen changes; when the pause time t of the finger pausing nearby the display screen falls within different intervals, tracks drawn on the display screen are different; in this manner, the user can freely perform switch between multiple types of thickness by controlling the pause time t of the finger pausing nearby the display screen, without requiring manually switching thickness options before the drawing.

The correspondence between the first attribute information about the gesture track and the second attribute information about the gesture track is described briefly above through an example, and the correspondence between the first attribute information about the gesture track and the second attribute information about the gesture track can also be designed as complicated correspondence according to actual requirements, for example, when the first attribute information about the gesture track is a combination of the distance between each point on the gesture track and the display screen and the moving speed of each point on the gesture track and the first attribute information about the gesture track is the thickness of each point which is on the gesture track and to be presented and the transparency of each point which is on the gesture track and to be presented, the preset rule is correspondence between the distance between each point on the gesture track and the display screen, the moving speed of each point on the gesture track, the thickness of each point which is on the gesture track and to be presented, and the transparency of each point which is on the gesture track and to be presented. The preset rule is that the shorter the distance between each point on the gesture track and the display screen is, the thicker the thickness of each point which is on the gesture track and to be presented is; the lower the moving speed of each point on the gesture track is, the lower the transparency of each point which is on the gesture track and to be presented is, as shown in FIG. 1F. It can even be adopted that a piece of first attribute information is corresponding to multiple pieces of second attribute information. An example is merely taken herein, and the correspondence between the first attribute information about the gesture track and the second attribute information about the gesture track can be specifically set according to actual requirements, which is not specifically limited in the embodiment of the present invention.

Step 400: Present the gesture track according to the second attribute information about the gesture track.

Multiple drawing brushwork types are supported in the drawing tool, and the drawing brushwork types can be freely selected; if a drawing brushwork type is selected by the user, a drawn line has features of the drawing brushwork type. For example, a drawing brushwork type is a fountain pen, a writing brush, a wax crayon, and a spray gun and the like.

Generally speaking, once feature information such as a drawing brushwork type and a color is selected, the feature information does not need to be frequently changed; therefore, the feature information such as the fixed drawing brushwork type and color can be used in the input of the gesture track, but the user is allowed to modify the feature information such as the fixed drawing brushwork type and color; in this manner, the trouble of acquiring the feature information such as the drawing brushwork type and the color is avoided before the input gesture track is presented each time, and the consumption of terminal resources is reduced.

It should be noted that feature information required for presenting the gesture track has many types, such as a drawing brushwork type and a color; in the embodiment of the present invention, a value of the feature information which is set as the second attribute information is used in preference, and a value of other feature information which is not set as the second attribute information can be acquired from the space of a drawing tool in which the feature information is stored, and finally, the gesture track is presented according to the second attribute information about the gesture track and other feature information which is not set as the second attribute information.

It should be noted that the selection of each point on the gesture track can be determined according to the display requirements of the display screen of the terminal, and each point on the gesture track may also be selected according to requirements for implementing a solution, which is not specifically limited in the embodiment of the present invention.

In addition, it should be noted that if the first attribute information involved in the embodiment of the present invention is the same as attribute information in an existing drawing tool, and if there is no conflict in the second attribute information affected by the first attribute information involved in the embodiment of the present invention and the attribute information in the existing drawing tool, the second attribute information indicated in the embodiment of the present invention and the attribute information in the existing drawing tool can be merged and presented; if there is a conflict, the second attribute information in the embodiment of the present invention or the attribute information in the existing drawing tool is selected and presented. For example, when the drawing brushwork type is a spray gun, in the existing drawing tool, sparseness of drawing a point changes as a pause time of the spray gun changes; in the embodiment of the present invention, the thickness of drawing a point changes as the pause time of the spray gun changes; in this manner, the two display effects can be merged in display, that is, the sparseness and the thickness of drawing a point simultaneously change as the pause time of the spray gun changes.

In the drawing control method provided in this embodiment, the gesture track input by the user is detected, where the gesture track is the gesture track generated in the process in which the user controls the non-contact movement of the input device relative to the display screen, then the first attribute information about the gesture track is acquired, and then the gesture track is recognized according to the preset rule and the first attribute information about the gesture track, so as to acquire the second attribute information about the gesture track, and finally the gesture track is presented according to the second attribute information about the gesture track; in the manner, part of feature information required for presenting the track is carried in the first attribute information about the gesture track, and therefore, it is avoided that the user frequently manually switches all kinds of options to implement the input of the gesture track, thereby solving a problem of the complexity in drawing operations.

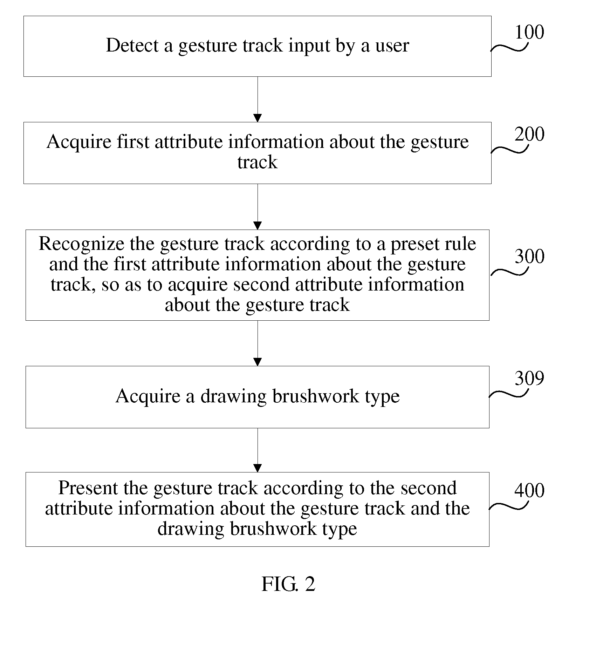

FIG. 2 is a flow chart of a drawing control method provided in another embodiment of the present invention. This embodiment is implemented based on the embodiment shown in FIG. 1. As shown in FIG. 2, before the step 400, the method further includes:

Step 309: Acquire a drawing brushwork type.

In the embodiment of the present invention, the presenting the gesture track according to the second attribute information about the gesture track specifically includes: presenting the gesture track according to the second attribute information about the gesture track and the drawing brushwork type.

Generally speaking, once being selected, the drawing brushwork type does not need to be frequently changed; however, for some users having very high drawing requirements, the users need to frequently change a drawing brushwork type to meet the drawing requirements of the users; therefore, in view of this, in the embodiment of the present invention, the drawing brushwork type may also be acquired before each gesture track, so as to update the drawing brushwork type of the gesture track in time.

In this embodiment, the drawing brushwork type is viewed first, and then the gesture track is presented on the display screen by using the drawing brushwork type and the second attribute information about the gesture track, rather than always using a fixed drawing brushwork type; in this manner, in the whole drawing process, the gesture track can be presented by using the drawing brushwork type substituted by the user in time.

It should be noted that the terminal can be controlled by using a conventional manner; additionally, the terminal can further receive a gesture input by the user, and then match the received gesture with pre-stored gestures, and if the pre-stored gestures have a gesture matching the received gesture, further acquire a gesture command corresponding to the gesture.

It is noted herein that when the pre-stored gestures are compared with the received gesture, an existing graphics matching algorithm can be used to calculate a similarity between a pre-stored gesture and the received gesture, for example, a Shape matching algorithm. Whether the pre-stored gesture is the same as or similar to the received gesture is determined, the similarity of the graphics is measured, and a value of the similarity between the graphics is returned. A graphic matching method is invariant to geometric transformation such as translation, rotation, and scaling; the similarity of the graphics should be measurable and easy to be calculated, and the determination obtained according to the matching algorithm should be consistent with the instinct of human being.

The pre-stored gesture command may be set when the terminal is delivered by a factory, or may be preset by a user, or may be downloaded from a network and saved to the terminal. Operation processes of several gestures involved in the embodiment of the present invention are described in detail in the following.

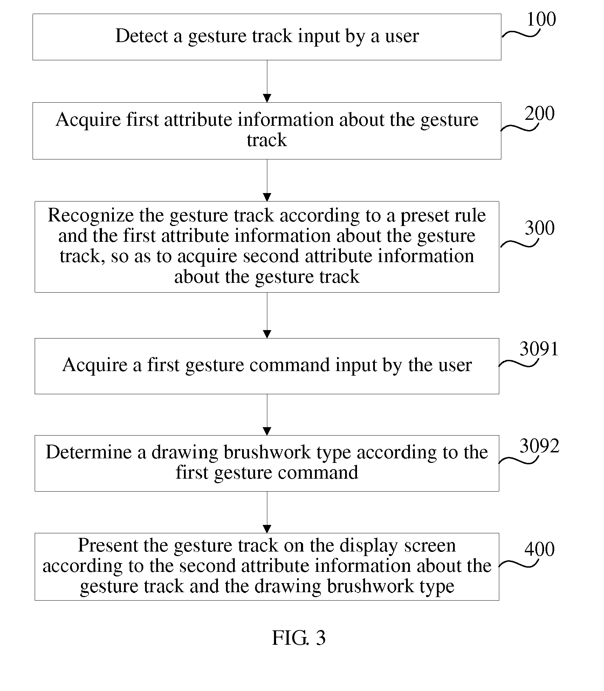

FIG. 3 is a flow chart of a drawing control method provided in another embodiment of the present invention. This embodiment is implemented based on the embodiment shown in FIG. 2. As shown in FIG. 3, the step 309 specifically includes:

Step 3091: Acquire a first gesture command input by the user.

Step 3092: Determine a drawing brushwork type according to the first gesture command.

Optionally, the drawing brushwork type corresponding to the first gesture is determined according to the first gesture command.

A mapping relationship between a first gesture command and a drawing brushwork type is pre-stored in a terminal, where each first gesture command is corresponding to a drawing brushwork type. When the first gesture matches the pre-stored first gesture, the pre-stored mapping relationship between a first gesture command and a drawing brushwork type is searched for to obtain the drawing brushwork type corresponding to the first gesture command.

The first gesture command input by the user is acquired and then the drawing brushwork type is determined according to the first gesture command, and therefore, the user can flexibly control the drawing brushwork type through the gesture command, and the drawing process of the user is more coherent and smoother and is more like the feeling of the drawing in reality, thereby improving ease of use of the terminal.

Optionally, at least one drawing brushwork type is presented according to the first gesture command, and then the drawing brushwork type is determined by receiving selection made by user on the at least one drawing brushwork type.

In this method, the first gesture command is a command used to call-out part or all of drawing brushwork types and then instructs the user to make selection on the drawing brushwork types; in this manner, the user can implement the selection of a drawing brushwork type through a simple gesture call-out command and a selection operation, thereby implementing the drawing process more easily and providing ease of use of the terminal.

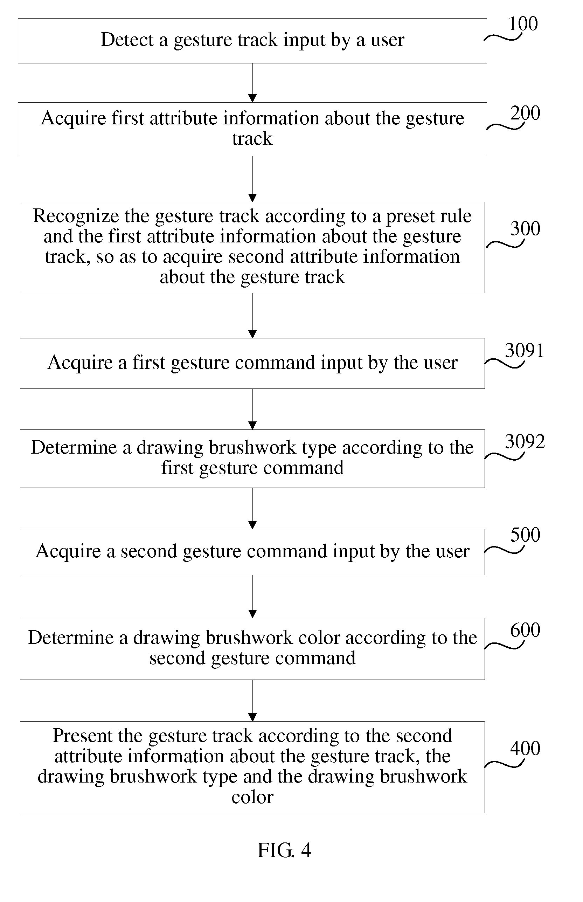

FIG. 4 is a flow chart of a drawing control method provided in another embodiment of the present invention. This embodiment is implemented based on the embodiments shown in FIG. 1, FIG. 2, and FIG. 3. FIG. 4 shows a flow chart of implementing the embodiment based on FIG. 3; the method further includes:

Step 500: Acquire a second gesture command input by the user.

Step 600: Determine a drawing brushwork color according to the second gesture command.

An execution sequence of steps 3091-3092-500-600 in FIG. 4 is merely an example, and a specific implementation process may also be steps 500-600-3091-3092.

In the embodiment of the present invention, the presenting the gesture track according to the second attribute information about the gesture track specifically includes: presenting the gesture track according to the second attribute information about the gesture track and the drawing brushwork color; or presenting the gesture track according to the second attribute information about the gesture track, the drawing brushwork type and the drawing brushwork color.

Optionally, a mapping relationship between a second gesture command and a common drawing brushwork color is pre-stored in a terminal, where each second gesture command is corresponding to a drawing brushwork color. When the second gesture command matches the pre-stored second gesture command, the mapping relationship between the pre-stored second gesture command and the drawing brushwork color is searched for to obtain the drawing brushwork type corresponding to the second gesture command.

In the embodiment of the present invention, the second gesture command input by the user is acquired and then the drawing brushwork color is determined according to the second gesture command, and therefore, the user can flexibly control the drawing brushwork color through the gesture command, and the drawing process of the user is more coherent and smoother and is more like the feeling of the drawing in reality, thereby improving ease of use of the terminal.

Optionally, a color drawing board is presented according to the second gesture command, and then the drawing brushwork color is determined by receiving selection made by user on a color in the color drawing board.

In this method, the second gesture command is a command used to call-out part or all of drawing brushwork colors and then instructs the user to make selection on the drawing brushwork colors; in this manner, the user can implement the selection of a drawing brushwork color through a simple gesture call-out command and a selection operation, thereby implementing the drawing process more easily and providing ease of use of the terminal.

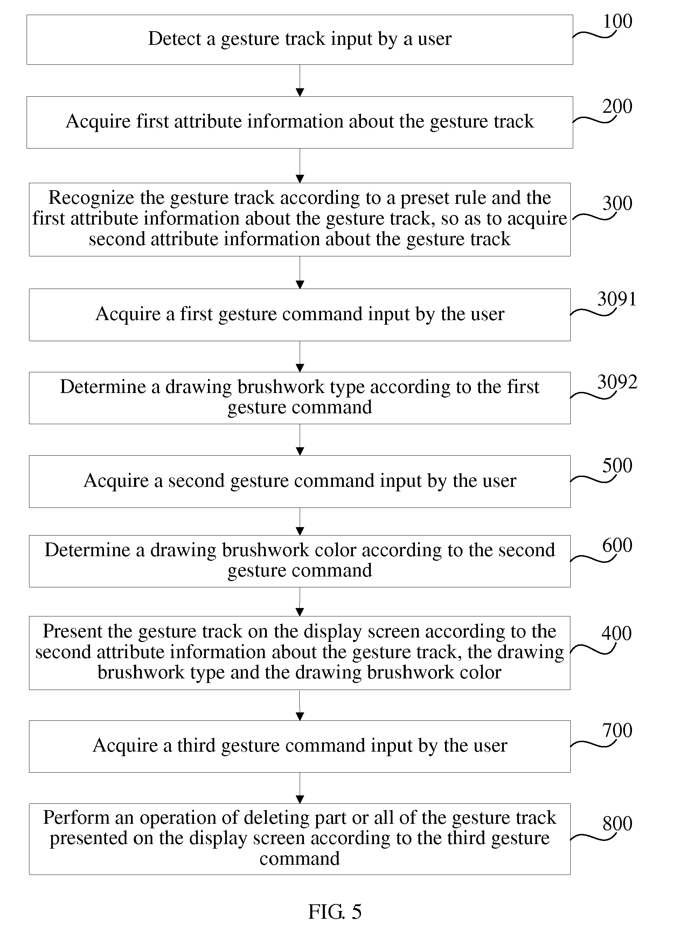

FIG. 5 is a flow chart of a drawing control method provided in another embodiment of the present invention. This embodiment is implemented based on the embodiments shown in FIG. 1, FIG. 2, FIG. 3, and FIG. 4. FIG. 5 shows a flow chart of implementing the embodiment based on FIG. 4; the method further includes:

Step 700: Acquire a third gesture command input by the user.

Step 800: Perform an operation of deleting part or all of the gesture track presented on the display screen according to the third gesture command.

In the embodiment of the present invention, the third gesture command input by the user is acquired and then the operation of deleting part or all of the gesture track is performed according to the third gesture command, and therefore, the user can flexibly modify the gesture track through the gesture command, thereby improving ease of use of the terminal.

It should be noted that the method implemented in all the embodiments of the present invention is not limited to the drawing and may also be used in other situations in which information is input in the terminal, for example, a short message is input, that is, when the user inputs short message information, the terminal can also acquire the second attribute information according to the acquired first attribute information about the gesture track and finally present the gesture track of the user according to the second attribute information; in this manner, the gesture track input by the user is not single, and thickness, transparency and the like of the presented gesture track can be regulated by freely adjusting the first attribute information about the gesture track. Also, because of such a function, the user can conveniently increase the thickness of input information, and therefore, a person with a poor sight can also input content by better using the terminal.

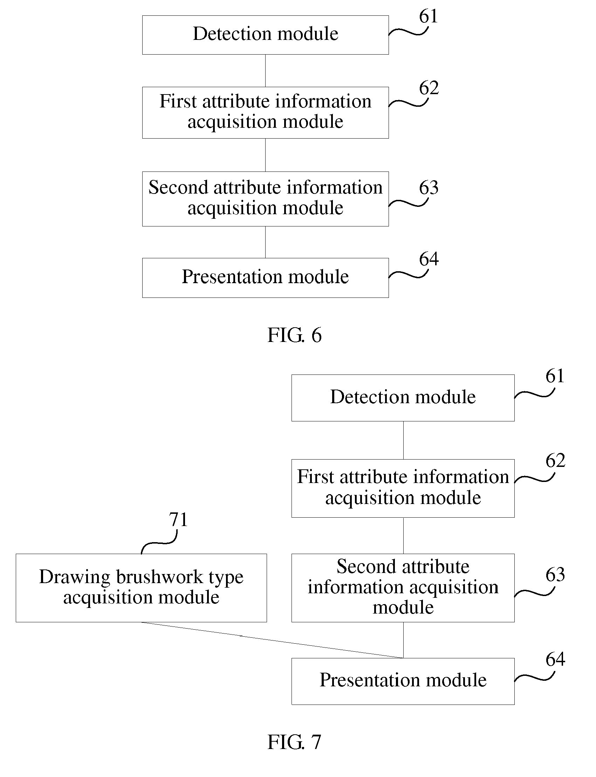

FIG. 6 is a schematic structural diagram of a drawing control apparatus provided in an embodiment of the present invention. The drawing control apparatus shown in FIG. 6 includes a detection module 61, a first attribute information acquisition module 62, a second attribute information acquisition module 63, and a presentation module 64.

The detection module 61 is configured to detect a gesture track input by a user, where the gesture track is a gesture track generated in a process in which at least one finger of the user moves; the first attribute information acquisition module 62 is configured to acquire first attribute information about the gesture track according to the gesture track detected by the detection module 61; the second attribute information acquisition module 63 is configured to recognize the gesture track according to a preset rule and the first attribute information which is about the gesture track and acquired by the first attribute information acquisition module 62, so as to acquire second attribute information about the gesture track; and the presentation module 64 is configured to present the gesture track according to the second attribute information which is about the gesture track and acquired by the second attribute information acquisition module 63.

It should be noted that the first attribute information about the gesture track is feature information about the gesture track recognized by the drawing control apparatus. For example, the first attribute information about the gesture track includes any one of the following attributes or a combination thereof: a distance between each point on the gesture track and the display screen; a moving speed or an acceleration of the gesture track; and a pause time of each point on the gesture track. The above listed first attribute information is merely an example, and other attribute information may be further used, that is, all attribute information used by the terminal to recognize the gesture track can be applied in the embodiment of the present invention, which falls within the protection scope of the embodiment of the present invention.

It should be noted that the second attribute information about the gesture track includes part or all of the feature information required by the drawing control apparatus for displaying the gesture track. For example, the second attribute information about the gesture track includes any one of the following attributes or a combination thereof: thickness of each point which is on the gesture track and to be presented; and transparency of each point which is on the gesture track and to be presented. The above listed second attribute information is merely an example, and other attribute information may be further used, that is, all feature information required by the terminal for displaying the gesture track can be applied in the embodiment of the present invention, which falls within the protection scope of the embodiment of the present invention.

The preset rule is pre-stored correspondence between the first attribute information about the gesture track and the second attribute information about the gesture track. For the examples of several implementation manners of the preset rule, reference may be made to related description in the method embodiment, and the details are not described herein again.

It should be further noted that the correspondence between the first attribute information about the gesture track and the second attribute information about the gesture track may be discrete, that is, the first attribute information about the gesture track is divided into different intervals, and each interval is corresponding to a value of the second attribute information about the gesture track; or the correspondence may be continuous, that is, it is not divided into intervals but a conversion coefficient is preset, where the conversion coefficient is used to convert the first attribute information about the gesture track to obtain the second attribute information about the gesture track, that is, the first attribute information about the gesture track is multiplied by the preset conversion coefficient to obtain the second attribute information about the gesture track.

It should be noted that feature information required for presenting the gesture track has many types, such as a drawing brushwork type and a color; in the embodiment of the present invention, a value of the feature information which is set as the second attribute information is used in preference, and a value of other feature information which is not set as the second attribute information can be acquired from the space of a drawing tool in which the feature information is stored, and finally, the gesture track is presented according to the second attribute information about the gesture track and other feature information which is not set as the second attribute information.

In the drawing control apparatus provided in this embodiment, the detection module 61 detects the gesture track input by the user, where the gesture track is the gesture track generated in the process in which at least one finger of the user moves; then the first attribute information acquisition module 62 acquires the first attribute information about the gesture track according to the gesture track detected by the detection module 61; then the second attribute information acquisition module 63 recognizes the gesture track according to the preset rule and the first attribute information which is about the gesture track and acquired by the first attribute information acquisition module 62, so as to acquire the second attribute information about the gesture track; and finally the presentation module 64 presents the gesture track according to the second attribute information which is about the gesture track and acquired by the second attribute information acquisition module 63; in this manner, part of feature information required for presenting the track is carried in the first attribute information about the gesture track, and therefore, it is avoided that the user frequently manually switches all kinds of options to implement the input of the gesture track, thereby solving a problem of the complexity in drawing operations.

In an optional implementation manner, as shown in FIG. 7, the drawing control apparatus further includes a drawing brushwork type acquisition module 71, configured to acquire a drawing brushwork type; in this situation, the presentation module 64 is specifically configured to present the gesture track according to the second attribute information which is about the gesture track and acquired by the second attribute information acquisition module 63 and the drawing brushwork type acquired by the drawing brushwork type acquisition module 71.

Generally speaking, once being selected, the drawing brushwork type does not need to be frequently changed; however, for some users having very high drawing requirements, the users need to frequently change a drawing brushwork type to meet the drawing requirements of the users; therefore, in view of this, in the embodiment of the present invention, the drawing brushwork type acquisition module 71 may further be set to acquire a drawing brushwork type before each gesture track, so as to update the drawing brushwork type of the gesture track in time.

In this embodiment, the drawing brushwork type acquisition module 71 views the drawing brushwork type first, and then the gesture track is displayed on the display screen by using the drawing brushwork type and the second attribute information about the gesture track, rather than always using a fixed drawing brushwork type; in this manner, the drawing control apparatus can display the gesture track by using the drawing brushwork type substituted by the user in time.

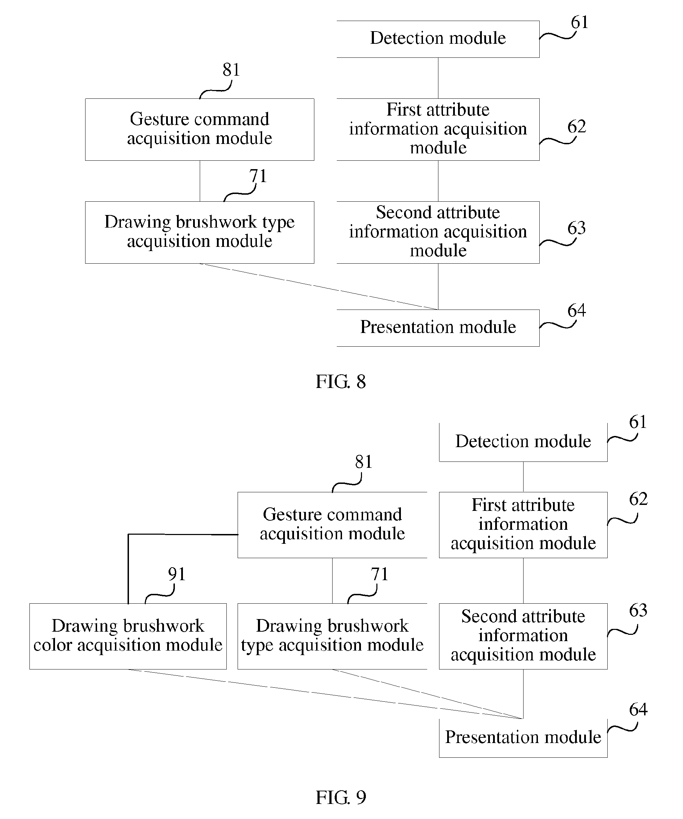

In an optional implementation manner, as shown in FIG. 8, the drawing control apparatus further includes a gesture command acquisition module 81, configured to acquire a first gesture command input by the user. In this situation, the drawing brushwork type acquisition module 71 is specifically configured to determine the drawing brushwork type according to the first gesture command acquired by the gesture command acquisition module 81. The first gesture command input by the user is acquired and then the drawing brushwork type is determined according to the first gesture command, and therefore, the user can flexibly control the drawing brushwork type through the gesture command, and the drawing process of the user is more coherent and smoother and is more like the feeling of the drawing in reality, thereby improving ease of use of the terminal; or
at least one drawing brushwork type is presented according to the first gesture command acquired by the gesture command acquisition module 81; the drawing brushwork type is determined by receiving the selection made by the user on the at least one drawing brushwork type, and the gesture command acquisition module 81 calls out part or all of drawing brushwork types and then instructs the user to make selection on the drawing brushwork types; in this manner, the user can implement the selection of a drawing brushwork type by a simple gesture call-out command and a selection operation, thereby implementing the drawing process more easily and providing ease of use of the terminal.

In an optional implementation manner, as shown in FIG. 9, the drawing control apparatus further includes a drawing brushwork color acquisition module 91, configured to determine a drawing brushwork color according to the second gesture command acquired by the gesture command acquisition module 81; the presentation module 64 is specifically configured to present the gesture track according to the second attribute information about the gesture track, the drawing brushwork type, and the drawing brushwork color.

Optionally, in a situation in which the brushwork type does not need to be frequently changed, the presentation module 64 may be further specifically configured to present the gesture track according to the second attribute information about the gesture track and the drawing brushwork color.

In the embodiment of the present invention, the drawing brushwork color acquisition module 91 acquires the second gesture command input by the user and then determines the drawing brushwork color according to the second gesture command, and therefore, the user can flexibly control the drawing brushwork color through the gesture command; in this manner, and the drawing process of the user is more coherent and smoother and is more like the feeling of the drawing in reality, thereby improving ease of use of the terminal.

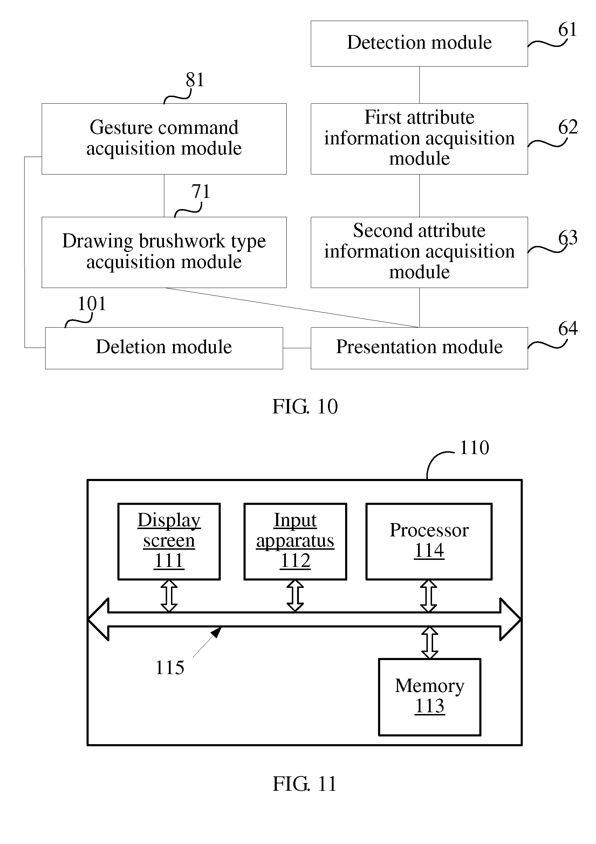

In an optional implementation manner, as shown in FIG. 10, an apparatus module diagram implemented by the apparatus based on FIG. 8 is provided; the gesture command acquisition module 81 is further configured to acquire a third gesture command input by the user; the drawing control apparatus further includes a deletion module 101, configured to perform an operation of deleting part or all of the presented gesture track according to the third gesture command acquired by the gesture command acquisition module 81.

Optionally, on the basis of the apparatus based on FIG. 8, the deletion module 101 may be further added, and the details are not described herein again.

In the embodiment of the present invention, the third gesture command input by the user is acquired and then the operation of deleting part or all of the gesture track is performed according to the third gesture command, and therefore, the user can flexibly modify the gesture track through the gesture command, thereby improving ease of use of the terminal.

FIG. 11 is a schematic structural diagram of a terminal provided in an embodiment of the present invention.

An apparatus 110 includes a display screen 111, an input apparatus 112, a memory 113, a central processing unit 114, and a bus 115.

The display screen 111 may be a proper apparatus such as a cathode ray tube (CRT, Cathode Ray Tube) display screen, a liquid crystal display (LCD, Liquid Crystal Display) screen, or a touch display screen (Touch Display Screen), and a graphical user interface is presented on a screen of the display screen by receiving an instruction through the bus 115.

The input apparatus 112 may include any proper apparatus such as a keyboard, a mouse, a track recognizer, and a speech recognition interface, and is configured to receive input of a user, and generate control input and send the control input to the central processing unit or another component through the bus 115. Particularly, when the display screen of the apparatus 110 has a touchscreen, the display screen may also be an input apparatus at the same time.

In addition, the memory 113 may include a RAM and a ROM, or any fixed storage medium or a movable storage medium, and is configured to store a program which can execute the embodiment of the present invention or an application database of the embodiment of the present invention, and through the bus 115, receive input of another component, or stored information, such as a moving track, which is invoked by the another component.

The central processing unit 114 is configured to execute a program, stored in the memory 113, of the embodiment of the present invention, and perform bi-directional communication with another apparatus through the bus.

The memory 113 and the central processing unit 114 may also be integrated into a physical module applying the embodiment of the present invention, and a program implementing the embodiment of the present invention is stored and operates on the physical module.

Components of the apparatus 110 are coupled together through the bus system 115, where, in addition to a data bus, the bus system 115 may further include a power bus, a control bus, and a status signal bus. However, to make the description clear, all kinds of buses are marked as the bus system 115 in the figure.

In the embodiment of the present invention, units of the apparatus 110 execute the following content: the input apparatus 112 is configured to detect the gesture track input by the user, where the gesture track is a gesture track generated in a process in which at least one finger of the user moves; the central processing unit 113 is configured to parse first attribute information which is about the gesture track and acquired by the input apparatus 112, and is further configured to recognize the gesture track according to a preset rule and the first attribute information about the gesture track, so as to acquire second attribute information about the gesture track; the display screen 111 is configured to present the gesture track according to the second attribute information which is about the gesture track and acquired by the central processing unit; and the memory 113 is configured to store the preset rule.

It should be noted that the first attribute information about the gesture track is feature information about the gesture track, which is recognized by the drawing control apparatus. For example, the first attribute information about the gesture track includes any one of the following attributes or a combination thereof: a distance between each point on the gesture track and the display screen; a moving speed or an acceleration of the gesture track; and a pause time of each point on the gesture track. The above listed first attribute information is merely an example, and other attribute information may be further used, that is, all attribute information used by the terminal to recognize the gesture track can be applied in the embodiment of the present invention, which falls within the protection scope of the embodiment of the present invention.

It should be noted that the second attribute information about the gesture track includes part or all of the feature information required by the drawing control apparatus for displaying the gesture track. For example, the second attribute information about the gesture track includes any one of the following attributes or a combination thereof: thickness of each point which is on the gesture track and to be presented; and transparency of each point which is on the gesture track and to be presented. The above listed second attribute information is merely an example, and other attribute information may be further used, that is, all feature information required by the terminal for displaying the gesture track can be applied in the embodiment of the present invention, which falls within the protection scope of the embodiment of the present invention.

The preset rule is pre-stored correspondence between the first attribute information about the gesture track and the second attribute information about the gesture track. For the examples of several implementation manners of the preset rule, reference may be made to related description in the method embodiment, and the details are not described herein again.

It should be further noted that the correspondence between the first attribute information about the gesture track and the second attribute information about the gesture track may be discrete, that is, the first attribute information about the gesture track is divided into different intervals, and each interval is corresponding to a value of the second attribute information about the gesture track; or the correspondence may be continuous, that is, it is not divided into intervals but a conversion coefficient is preset, where the conversion coefficient is used to convert the first attribute information about the gesture track to obtain the second attribute information about the gesture track, that is, the first attribute information about the gesture track is multiplied by the preset conversion coefficient to obtain the second attribute information about the gesture track.

It should be noted that feature information required for presenting the gesture track has many types, such as a drawing brushwork type and a color; in the embodiment of the present invention, a value of the feature information which is set as the second attribute information is used in preference, and a value of other feature information which is not set as the second attribute information can be acquired from the space of a drawing tool in which the feature information is stored, and finally, the gesture track is presented according to the second attribute information about the gesture track and other feature information which is not set as the second attribute information.

In the terminal provided in this embodiment, the input apparatus 112 is configured to detect the gesture track input by the user, where the gesture track is the gesture track generated in the process in which at least one finger of the user moves; the central processing unit 113 is configured to parse the first attribute information which is about the gesture track and acquired by the input apparatus 112; and the central processing unit 113 is further configured to recognize the gesture track according to the preset rule and the first attribute information about the gesture track, so as to acquire the second attribute information about the gesture track; and the display screen 111 is configured to present the gesture track according to the second attribute information which is about the gesture track and acquired by the central processing unit; in this manner, part of feature information required for presenting the track is carried in the first attribute information about the gesture track, and therefore, it is avoided that the user frequently manually switches all kinds of options to implement the input of the gesture track, thereby solving a problem of the complexity in drawing operations.

Optionally, the central processing unit 113 is further configured to acquire the drawing brushwork type; the central processing unit 111 is specifically configured to present the gesture track according to the second attribute information about the gesture track and the drawing brushwork type.

Generally speaking, once being selected, the drawing brushwork type does not need to be frequently changed; however, for some users having very high drawing requirements, the users need to frequently change a drawing brushwork type to meet the drawing requirements of the users; therefore, in view of this, in the embodiment of the present invention, the central processing unit 111 may further be set to acquire a drawing brushwork type before each gesture track, so as to update the drawing brushwork type of the gesture track in time.

Optionally, the input apparatus 112 is further configured to acquire a first gesture command input by the user; the central processing unit is specifically configured to determine the drawing brushwork type according to the first gesture command acquired by the input apparatus 112. The drawing brushwork type is viewed first, and then the gesture track is presented on the display screen by using the drawing brushwork type and the second attribute information about the gesture track, rather than by always using a fixed drawing brushwork type; in this manner, the terminal can display the gesture track by using the drawing brushwork type substituted by the user in time.

Optionally, the central processing unit 113 is specifically configured to determine the drawing brushwork type corresponding to a first gesture according to the first gesture command acquired by the input apparatus 112; the first gesture command input by the user is acquired and then the drawing brushwork type is determined according to the first gesture command, and therefore, the user can flexibly control the drawing brushwork type through the gesture command, and the drawing process of the user is more coherent and smoother and is more like the feeling of the drawing in reality, thereby improving ease of use of the terminal; or
at least one drawing brushwork type is presented according to the first gesture command acquired by the input apparatus 112; the drawing brushwork type is determined by receiving, by the input apparatus 112, selection made by the user on the at least one drawing brushwork type; in this manner, the user can implement the selection of a drawing brushwork type through a simple gesture call-out command and a selection operation, thereby implementing the drawing process more easily and providing ease of use of the terminal.

Optionally, the input apparatus 112 is further configured to acquire a second gesture command input by the user; the central processing unit 113 is further configured to determine a drawing brushwork color according to the second gesture command acquired by the input apparatus 112; the central processing unit 111 is specifically configured to present the gesture track according to the second attribute information about the gesture track and the drawing brushwork color; or present the gesture track according to the second attribute information about the gesture track, the drawing brushwork type and the drawing brushwork color.

The second gesture command input by the user is acquired and then the drawing brushwork color is determined according to the second gesture command, and therefore, the user can flexibly control the drawing brushwork color through the gesture command, and the drawing process of the user is more coherent and smoother and is more like the feeling of the drawing in reality, thereby improving ease of use of the terminal.

Optionally, the input apparatus 112 is further configured to acquire a third gesture command input by the user; the central processing unit 113 is further configured to instruct, according to the third gesture command acquired by the input apparatus 112, the central processing unit 111 to perform an operation of deleting all or part of the presented gesture track.

The third gesture command input by the user is acquired and then the operation of deleting part or all of the gesture track is performed according to the third gesture command, and therefore, the user can flexibly modify the gesture track through the gesture command, thereby improving ease of use of the terminal.

Pieces of hardware of the terminal in this embodiment can be configured to implement processes of the drawing control methods shown in FIG. 1 to FIG. 5; the details of the working principles of the pieces of the hardware of the terminal are not described herein again, and for details, reference may be made to the description of the method embodiments.

The terminal involved in all the embodiments of the present invention may be a terminal which can recognize a gesture which has a direct contact with the display screen of the terminal, for example, a single-click, a double-click, a movement and the like on a surface of the display screen of the terminal, or may be a terminal which can recognize a gesture which does not have a direct contact with the display screen of the terminal, for example, a gesture recognized when moving nearby the display screen of the terminal, including an operation in which a hand moves in front of the display screen and the like. For example, the terminal may be a mobile phone, a tablet computer, an ipad, or may be a projector, a television, or a desktop computer or the like.

In this embodiment, for the terminal provided in this embodiment, the gesture track input by the user is detected, where the gesture track is the gesture track generated in the process in which the user controls the non-contact movement of the input device relative to the display screen, then the first attribute information about the gesture track is acquired, and then the gesture track is recognized according to the preset rule and the first attribute information about the gesture track, so as to acquire the second attribute information about the gesture track, and finally the gesture track is presented according to the second attribute information about the gesture track, part of feature information required for presenting the track is carried in the first attribute information about the gesture track, and therefore, it is avoided that the user frequently manually switches all kinds of options to implement the input of the gesture track, thereby solving a problem of the complexity in drawing operations.

Persons of ordinary skill in the art should understand that all or part of the steps of the method according to each embodiment may be implemented by a program instructing relevant hardware. The above program may be stored in a computer readable storage medium. When the program runs, the program executes the steps of the method according to each embodiment above. The storage medium may be any medium capable of storing program codes, such as a ROM, a RAM, a magnetic disk, or an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not cause the essence of corresponding technical solutions to depart from the idea and scope of the present invention.

## Claims

1. A drawing control method, comprising:
detecting a gesture track input by a user, wherein the gesture track is a gesture track generated in a process in which the user controls non-contact movement of an input device relative to a display screen;
acquiring first attribute information about the gesture track, wherein the first attribute information about the gesture track is feature information about the gesture track, which is recognized by a terminal;
recognizing the gesture track according to a preset rule and the first attribute information about the gesture track, so as to acquire second attribute information about the gesture track, wherein the second attribute information about the gesture track comprises part or all of the feature information required by the terminal for displaying the gesture track; and
presenting the gesture track according to the second attribute information about the gesture track.

2. The method according claim 1, wherein the first attribute information about the gesture track comprises any one of the following attributes or a combination thereof:
a distance between each point on the gesture track and the display screen;
a moving speed or an acceleration of each point on the gesture track; and
a pause time of each point on the gesture track.

3. The method according claim 1 or 2, wherein the second attribute information about the gesture track comprises any one of the following attributes or a combination thereof:
thickness of each point which is on the gesture track and to be presented; and
transparency of each point which is on the gesture track and to be presented.

4. The method according to any one of claims 1 to 3, wherein before the presenting the gesture track according to the second attribute information about the gesture track, the method further comprises:
acquiring a drawing brushwork type; and
the presenting the gesture track according to the second attribute information about the gesture track specifically comprises:
presenting the gesture track according to the second attribute information about the gesture track and the drawing brushwork type.

5. The method according to claim 4, wherein the acquiring a drawing brushwork type specifically comprises:
acquiring a first gesture command input by the user; and
determining the drawing brushwork type according to the first gesture command.

6. The method according to claim 5, wherein the determining the drawing brushwork type according to the first gesture command specifically comprises:
determining the drawing brushwork type corresponding to the first gesture according to the first gesture command; or
presenting at least one drawing brushwork type according to the first gesture command; and
determining the drawing brushwork type by receiving selection made by the user on the at least one drawing brushwork type.

7. The method according to any one of claims 1 to 6, further comprising:
acquiring a second gesture command input by the user; and
determining a drawing brushwork color according to the second gesture command; wherein
the presenting the gesture track according to the second attribute information about the gesture track specifically comprises:
presenting the gesture track according to the second attribute information about the gesture track and the drawing brushwork color; or
presenting the gesture track according to the second attribute information about the gesture track, the drawing brushwork type and the drawing brushwork color.

8. The method according to any one of claims 1 to 7, wherein after the presenting the gesture track according to the second attribute information about the gesture track, the method further comprises:
acquiring a third gesture command input by the user; and
performing an operation of deleting part or all of the presented gesture track according to the third gesture command.

9. The method according to any one of claims 1 to 8, wherein when the first attribute information about the gesture track is the distance between each point on the gesture track and the display screen and the second attribute information about the gesture track is the thickness of each point which is on the gesture track and to be presented, the preset rule is that the shorter the distance between each point on the gesture track and the display screen is, the thicker the thickness of each point which is on the gesture track and to be presented is; or that the shorter the distance between each point on the gesture track and the display screen is, the thinner the thickness of each point which is on the gesture track and to be presented is.

10. The method according to any one of claims 1 to 8, wherein when the first attribute information about the gesture track is the distance between each point on the gesture track and the display screen and the second attribute information about the gesture track is the transparency of each point which is on the gesture track and to be presented, the preset rule is that the shorter the distance between each point on the gesture track and the display screen is, the lower the transparency of each point which is on the gesture track and to be presented is; or that the shorter the distance between each point on the gesture track and the display screen is, the higher the transparency of each point which is on the gesture track and to be presented is.

11. The method according to any one of claims 1 to 8, wherein when the first attribute information about the gesture track is the moving speed or the acceleration of the gesture track and the second attribute information about the gesture track is the thickness of each point which is on the gesture track and to be presented, the preset rule is that the lower the moving speed or the acceleration of the gesture track is, the thicker the thickness of each point which is on the gesture track and to be presented is; or that the shorter the distance between each point on the gesture track and the display screen is, the thinner the thickness of each point which is on the gesture track and to be presented is.

12. The method according to any one of claims 1 to 8, wherein when the first attribute information about the gesture track is the pause time of each point on the gesture track and the second attribute information about the gesture track is the thickness of each point which is on the gesture track and to be presented, the preset rule is that the longer the pause time of each point on the gesture track is, the thicker the thickness of each point which is on the gesture track and to be presented is; or that the longer the pause time of each point on the gesture track is, the thinner the thickness of each point which is on the gesture track and to be presented is.

13. A drawing control apparatus, comprising:
a detection module, configured to detect a gesture track input by a user, wherein the gesture track is a gesture track generated in a process in which the user controls non-contact movement of an input device relative to a display screen;
a first attribute information acquisition module, configured to acquire first attribute information about the gesture track according to the gesture track detected by the detection module, wherein the first attribute information about the gesture track is feature information about the gesture track, which is recognized by a terminal;
a second attribute information acquisition module, configured to recognize the gesture track according to a preset rule and the first attribute information which is about the gesture track and acquired by the first attribute information acquisition module, so as to acquire second attribute information about the gesture track, wherein the second attribute information about the gesture track comprises part or all of the feature information required by the terminal for displaying the gesture track; and
a presentation module, configured to present the gesture track according to the second attribute information which is about the gesture track and acquired by the second attribute information acquisition module.

14. The drawing control apparatus according claim 13, wherein the first attribute information about the gesture track comprises any one of the following attributes or a combination thereof:
a distance between each point on the gesture track and the display screen;
a moving speed or an acceleration of each point on the gesture track; and
a pause time of each point on the gesture track.

15. The drawing control apparatus according claim 13 or 14, wherein the second attribute information about the gesture track comprises any one of the following attributes or a combination thereof:
thickness of each point which is on the gesture track and to be presented; and
transparency of each point which is on the gesture track and to be presented.

16. The drawing control apparatus according to any one of claims 13 to 15, further comprising:
a drawing brushwork type acquisition module, configured to acquire a drawing brushwork type, wherein
the presentation module is specifically configured to present the gesture track according to the second attribute information which is about the gesture track and acquired by the second attribute information acquisition module and the drawing brushwork type acquired by the drawing brushwork type acquisition module.

17. The drawing control apparatus according to claim 16, further comprising:
a gesture command acquisition module, configured to acquire a first gesture command input by the user, wherein
the drawing brushwork type acquisition module is specifically configured to determine the drawing brushwork type according to the first gesture command acquired by the gesture command acquisition module.

18. The drawing control apparatus according to claim 17, wherein the drawing brushwork type acquisition module is specifically configured to:
determine the drawing brushwork type corresponding to the first gesture according to the first gesture command acquired by the gesture command acquisition module; or
present at least one drawing brushwork type according to the first gesture command acquired by the gesture command acquisition module; and
determine the drawing brushwork type by receiving selection made by the user on the at least one drawing brushwork type.

19. The drawing control apparatus according to any one of claims 13 to 18, wherein
the gesture command acquisition module is further configured to acquire a second gesture command input by the user, wherein
the drawing control apparatus further comprises:
a drawing brushwork color acquisition module, configured to determine a drawing brushwork color according to the second gesture command acquired by the gesture command acquisition module, wherein
the presentation module is specifically configured to present the gesture track according to the second attribute information about the gesture track and the drawing brushwork color, or present the gesture track according to the second attribute information about the gesture track, the drawing brushwork type and the drawing brushwork color.

20. The drawing control apparatus according to any one of claims 13 to 19, wherein
the gesture command acquisition module is further configured to acquire a third gesture command input by the user; and
the drawing control apparatus further comprises a deletion module, configured to perform an operation of deleting part or all of the presented gesture track according to the third gesture command acquired by the gesture command acquisition module.

21. A terminal, comprising:
an input apparatus, configured to detect a gesture track input by a user, wherein the gesture track is a gesture track generated in a process in which the user controls non-contact movement of an input device relative to a display screen;
a central processing unit, configured to parse first attribute information which is about the gesture track and acquired by the input apparatus, wherein the first attribute information about the gesture track is feature information about the gesture track, which is recognized by the terminal, wherein
the central processing unit is further configured to recognize the gesture track according to a preset rule and the first attribute information about the gesture track, so as to acquire second attribute information about the gesture track, wherein the second attribute information about the gesture track comprises part or all of the feature information required by the terminal for displaying the gesture track;
a display screen, configured to present the gesture track according to the second attribute information which is about the gesture track and acquired by the central processing unit; and
a memory, configured to store the preset rule.

22. The terminal according claim 21, wherein the first attribute information about the gesture track comprises any one of the following attributes or a combination thereof:
a distance between each point on the gesture track and the display screen;
a moving speed or an acceleration of each point on the gesture track; and
a pause time of each point on the gesture track.

23. The terminal according claim 21 or 22, wherein the second attribute information about the gesture track comprises any one of the following attributes or a combination thereof:
thickness of each point which is on the gesture track and to be presented; and
transparency of each point which is on the gesture track and to be presented.

24. The terminal according to any one of claims 21 to 23, wherein the central processing unit is further configured to acquire a drawing brushwork type; and
the display screen is specifically configured to present the gesture track according to the second attribute information about the gesture track and the drawing brushwork type.

25. The terminal according to claim 24, wherein
the input apparatus is further configured to acquire a first gesture command input by the user; and
the central processing unit is specifically configured to determine the drawing brushwork type according to the first gesture command acquired by the input apparatus.

26. The method according to claim 25, wherein the central processing unit is specifically configured to:
determine the drawing brushwork type corresponding to the first gesture according to the first gesture command acquired by the input apparatus; or
present at least one drawing brushwork type according to the first gesture command acquired by the input apparatus; and
determine the drawing brushwork type through selection, received by the input apparatus, made by the user on the at least one drawing brushwork type.

27. The terminal according to any one of claims 21 to 26, wherein
the input apparatus is further configured to acquire a second gesture command input by the user;
the central processing unit is further configured to determine a drawing brushwork color according to the second gesture command acquired by the input apparatus; and
the display screen is specifically configured to present the gesture track according to the second attribute information about the gesture track and the drawing brushwork color, or present the gesture track according to the second attribute information about the gesture track, the drawing brushwork type and the drawing brushwork color.

28. The terminal according to any one of claims 21 to 27, wherein
the input apparatus is further configured to acquire a third gesture command input by the user; and
the central processing unit is further configured to instruct, according to the third gesture command acquired by the input apparatus, the display screen to perform an operation of deleting all or part of the presented gesture track.
